# EUROPEAN PATENT APPLICATION

(11) **EP 4 628 619 A1**
(43) Date of publication of application: **08.10.2025**
(21) Application number: 23898341.5
(22) Date of filing: 30.11.2023
(51) Int. Cl.: C23C 2/06, C23C 2/40, C22C 18/00, C22C 18/04, C23C 2/28, C23C 2/02, C21D 8/02

(54) **PLATED STEEL SHEET AND MANUFACTURING METHOD THEREFOR**

(30) Priority: 30.11.2022 KR 20220164333
(71) Applicant: Hyundai Steel Company, Incheon 22525 (KR)
(72) Inventor: LEE, Jae Min, Incheon 22525 (KR); SO, Seong Min, Incheon 22525 (KR)
(74) Representative: Viering, Jentschura & Partner mbB Patent- und Rechtsanwälte
(86) International application number: PCT/KR2023/019575
(87) International publication number: WO 2024/117817

(57) **Abstract**

Provided is a plated steel sheet including a cold-rolled steel sheet; and a plating layer coated on the cold-rolled steel sheet and consisting of aluminum (AI): 0.5 wt% to 3 wt%, magnesium (Mg): 1 wt% to 2 wt%, silicon (Si): 0.005 wt% to 0.1 wt%, titanium (Ti): 0.01 wt% to 0.1 wt%, and a balance of zinc (Zn) and other unavoidable impurities, wherein the plating layer has a Ti-to-Si content ratio of 1.0 or more, and wherein the plating layer includes an intermetallic compound containing Ti.

## Description

### TECHNICAL FIELD

The present invention relates to a plated steel sheet and a method of manufacturing the same, and more particularly, to a plated steel sheet with excellent surface quality and a method of manufacturing the same.

### BACKGROUND ART

Existing hot-dip galvanized steel sheets are widely used in construction materials, home appliances, etc. due to their excellent sacrificial properties. When exposed to corrosive environments, zinc (Zn) acts as a sacrificial anode for exposed iron (Fe) and thus Zn loss occurs in the plating layer. Zn, acting as a sacrificial anode as described above, plays a significant role in suppressing the rusting of base steel in corrosive environments, but exhibits relatively low sacrificial anode efficiency. To solve this problem, high-corrosion-resistant plated products capable of achieving excellent corrosion resistance through the improvement of sacrificial anode efficiency by adding magnesium (Mg) to a Zn plating bath and forming dense corrosion products in corrosive environments are currently being produced.

The addition of Mg to Zn improves corrosion resistance but also sharply increases initial surface activity in corrosive environments. As a result, the surface of the plating layer rapidly blackens and degrades due to the formation of magnesium oxide. Furthermore, in high-corrosion-resistant plated steel sheets, when external foreign substances that cause supercooling are adsorbed during solidification immediately after plating, eutectic phases with a lamellar spacing of several nanometers are formed on the plated surface. When exposed to external corrosive environments, the eutectic phases corrode within a short time to form circular black spot defects and cause quality degradation. To mitigate this problem, oiling or postcoating is performed after plating to temporarily prevent rusting. However, the above-mentioned methods have limitations in controlling darkening.

The related art includes Japanese Patent Publication No. 2005-105367.

### DETAILED DESCRIPTION OF THE INVENTION

### TECHNICAL PROBLEM

The present invention provides a plated steel sheet capable of achieving excellent surface quality by controlling the microstructure of a plating layer to minimize darkening defects and black spot defects caused by an excessive increase in the activity of the plated surface, and a method of manufacturing the same.

However, the above description is an example, and the scope of the present invention is not limited thereto.

### TECHNICAL SOLUTION

According to an aspect of the present invention, there is provided a plated steel sheet including a cold-rolled steel sheet; and a plating layer coated on the cold-rolled steel sheet and consisting of aluminum (AI): 0.5 wt% to 3 wt%, magnesium (Mg): 1 wt% to 2 wt%, silicon (Si): 0.005 wt% to 0.1 wt%, titanium (Ti): 0.01 wt% to 0.1 wt%, and a balance of zinc (Zn) and other unavoidable impurities, wherein the plating layer has a Ti-to-Si content ratio of 1.0 or more, and wherein the plating layer includes an intermetallic compound containing Ti.

In the plated steel sheet, the intermetallic compound may include Ti: 3 wt% to 40 wt%, and further include two or more of Si: 3 wt% to 30 wt%, iron (Fe): 1 wt% to 40 wt%, and Al: 1 wt% to 50 wt%.

In the plated steel sheet, the intermetallic compound may contain Ti and Fe, and include Ti: 3 wt% to 40 wt% and Fe: 1 wt% to 40 wt%.

### ADVANTAGEOUS EFFECTS

According to an embodiment of the present invention, a plated steel sheet capable of achieving excellent surface quality by controlling the microstructure of a plating layer to minimize darkening defects and black spot defects caused by an excessive increase in the activity of the plated surface, and a method of manufacturing the same may be implemented.

However, the scope of the present invention is not limited to the above effect.

### DESCRIPTION OF THE DRAWINGS

FIG. 1 is a flowchart of a method of manufacturing a plated steel sheet, according to an embodiment of the present invention.
FIG. 2 is a microscopic image showing the surface of a plating layer of a plated steel sheet according to Test Example 2 of the present invention.
FIG. 3 is a microscopic image showing the surface of a plating layer of a plated steel sheet according to Test Example 9 of the present invention.

### MODE OF THE INVENTION

Hereinafter, the present invention will be described in detail by explaining embodiments of the invention with reference to the attached drawings. The invention may, however, be embodied in many different forms and should not be construed as being limited to the embodiments set forth herein; rather, these embodiments are provided so that this disclosure will be thorough and complete, and will fully convey the concept of the invention to one of ordinary skill in the art.

A plated steel sheet with excellent surface quality and a method of manufacturing the same, according to an embodiment of the present invention, will now be described in detail. The terms used herein are selected based on their functions in the present invention, and their definitions should be made in the context of the entire specification.

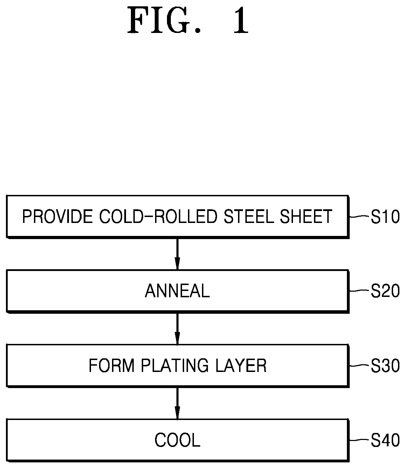

FIG. 1 is a flowchart of a method of manufacturing a plated steel sheet, according to an embodiment of the present invention.

Referring to FIG. 1, the plated steel sheet manufacturing method according to an embodiment of the present invention includes (a) providing a cold-rolled steel sheet (S10); (b) annealing the cold-rolled steel sheet (S20); (c) forming a plating layer consisting of aluminum (AI): 0.5 wt% to 3 wt%, magnesium (Mg): 1 wt% to 2 wt%, silicon (Si): 0.005 wt% to 0.1 wt%, titanium (Ti): 0.01 wt% to 0.1 wt%, and the balance of zinc (Zn) and other unavoidable impurities, on the annealed steel sheet by passing the steel sheet through a plating bath containing Al, Mg, Si, Ti, and Zn (S30); and (d) cooling the steel sheet coated with the plating layer (S40).

The plated steel sheet manufactured using the above-described method includes a cold-rolled steel sheet; and a plating layer coated on the cold-rolled steel sheet and consisting of Al: 0.5 wt% to 3 wt%, Mg: 1 wt% to 2 wt%, Si: 0.005 wt% to 0.1 wt%, Ti: 0.01 wt% to 0.1 wt%, and the balance of Zn and other unavoidable impurities, wherein the plating layer has a Ti-to-Si content ratio of 1.0 or more, and wherein the plating layer includes an intermetallic compound containing Ti.

The plating layer may further contain boron (B): 0.002 wt% to 0.02 wt%.

The intermetallic compound may include Ti: 3 wt% to 40 wt%, and further include two or more of Si: 3 wt% to 30 wt%, iron (Fe): 1 wt% to 40 wt%, and Al: 1 wt% to 50 wt%. The intermetallic compound may contain Ti and Fe, and include Ti: 3 wt% to 40 wt% and Fe: 1 wt% to 40 wt%.

The plating layer may include an Mg-rich phase, a primary Zn phase, a binary eutectic phase having a lamellar structure of Zn and MgZn₂ phases, and a ternary eutectic phase having a lamellar structure of MgZn₂ and Zn phases with Al. In the plating layer, the ternary eutectic phase may occupy an area fraction of 30% or more, and the binary eutectic phase may occupy an area fraction less than 30%.

The plating layer may have an Al-to-Mg ratio of 1.0 or more and 2.0 or less.

The plating layer may include an Mg-rich phase, a primary Zn phase, a binary eutectic phase having a lamellar structure of Zn and MgZn₂ phases, and a ternary eutectic phase having a lamellar structure of MgZn₂ and Zn phases with Al. The Mg-rich phase may include Mg: 5 wt% to 15 wt%, Zn: 85 wt% to 95 wt%, and Al: less than 1 wt%. The intermetallic compound containing Ti may exist in the Mg-rich phase.

The plated steel sheet manufacturing method according to an embodiment of the present invention includes (a) providing a cold-rolled steel sheet; (b) annealing the cold-rolled steel sheet; and (c) forming a plating layer consisting of Al: 0.5 wt% to 3 wt%, Mg: 1 wt% to 2 wt%, Si: 0.005 wt% to 0.1 wt%, Ti: 0.01 wt% to 0.1 wt%, and the balance of Zn and other unavoidable impurities, on the annealed steel sheet by passing the steel sheet through a plating bath containing Al, Mg, Si, Ti, and Zn, wherein the forming of the plating layer includes cooling the steel sheet at a cooling rate of 5 °C/sec to 30 °C/sec, wherein the plating layer has a Ti-to-Si content ratio of 1.0 or more, wherein the plating layer includes an intermetallic compound, and wherein the intermetallic compound includes Ti: 3 wt% to 40 wt%, and further includes two or more of Si: 3 wt% to 30 wt%, Fe: 1 wt% to 40 wt%, and Al: 1 wt% to 50 wt%.

The plating layer may be formed through the sequential solidification of the primary Zn phase, the binary eutectic phase, and the ternary eutectic phase, and the cooling rate after the binary eutectic phase is formed in the cooling may be higher than the cooling rate before the binary eutectic phase is formed.

When the difference between a temperature at which the binary eutectic phase is formed and a temperature at which the ternary eutectic phase is formed is 5°C or less, the cooling rate in the forming of the plating layer may be 5 °C/sec or more. When the difference between the temperature at which the binary eutectic phase is formed and the temperature at which the ternary eutectic phase is formed is 10°C or more, the cooling rate in the forming of the plating layer may be 10 °C/sec or more.

Mg added to Zn improves corrosion resistance but darkens the plated surface because Mg in the plating layer forms an oxide in corrosive environments. Thus, the surface structure of the plating layer needs to be controlled to minimize darkening. The microstructure of the plating layer coated using the plating bath of Zn and Mg may consist of a Zn single phase, a binary eutectic phase (Zn + MgZn₂), a ternary eutectic phase (Zn + Al + MgZn₂), and an Mg-rich phase. The binary eutectic phase may have a lamellar structure of Zn and MgZn₂ phases, and the ternary eutectic phase may have a lamellar structure of MgZn₂ and Zn phases with Al. The Mg-rich phase may include Mg: 5 wt% to 15 wt%, Zn: 85 wt% to 95 wt%, and Al: less than 1 wt%.

In the microstructure of the plating layer coated using the plating bath of Zn and Mg, the lamellar eutectic phases with numerous reaction interfaces accelerate the darkening of the plating layer in corrosive environments. Among these eutectic phases, the ternary eutectic phase contributes significantly to darkening. The smaller the lamellar spacing of the eutectic phases, the greater the acceleration of darkening. For these reasons, the fractions of the eutectic phases and the primary Zn phase need to be controlled. Although the fractions of these phases may be controlled by adjusting the contents of Al and Mg, the restrictive nature of the Al and Mg contents makes achieving excellent corrosion resistance difficult. Meanwhile, when the plated surface achieves excellent quality by adding Al: 0.5 wt% to 3 wt% and Mg: 1 wt% to 2 wt% with respect to the total weight of the plating composition capable of exhibiting corrosion resistance, a plated steel sheet with excellent corrosion resistance may be obtained. The content of Al needs to be at least 0.5 wt% to prevent the oxidation of Mg. When the content of Al exceeds 3 wt%, the ternary eutectic phase develops excessively, accelerating the darkening of the plated surface. The content of Mg, which is directly involved in the formation of plated surface activation phases, may be at least 1 wt%. To form the eutectic phases that contribute to corrosion resistance, Mg needs to be added in an amount of 1 wt% or more. When the content of Mg exceeds 2 wt%, the fractions of Mg-related phases rapidly increase and thus the plated surface activation becomes uncontrollable. Meanwhile, to more effectively reduce the activity on the plated surface as desired by the present invention within the restrictive range of the Al and Mg contents, trace elements are added. Because a high-corrosion-resistant plating bath contains a higher content of Al compared to existing Zn plating baths, Fe is easily eluted from the base steel sheet during plating. To control this, a small amount of Si is added. Si added for this purpose reduces the amount of Fe eluted from the base steel, significantly decreasing the formation of Fe dross and ensuring the provision of a plated steel sheet with excellent surface quality. The content of Si may be 0.005 wt% to 0.1 wt%. For alloy layer control, the content of Si needs to be 0.005 wt% or more. When the content of Si exceeds 0.1 wt%, an Mg₂Si phase is formed to hinder the workability of the plating layer. In addition, Si acts as a nucleation site and a grain growth barrier to refine the microstructure of the plating and improve corrosion resistance. However, because Si forms numerous fine eutectic phases on the plated surface, the surface activation may increase and the darkening of the plated surface is accelerated. Thus, the content of Si needs to be controlled properly.

While securing the Fe elution reduction effect through the addition of Si as described above, Ti and/or titanium boride (TiB) for suppressing the refinement of the eutectic phases may also be added to reduce the acceleration of darkening on the plated surface in corrosive environments. Ti and/or TiB combine with Fe and Si, which act as nucleation sites in the plating bath, to form an intermetallic compound. This reduces the refinement of the primary phase and the lamellar spacing of the eutectic phases during solidification after plating. Additionally, the intermetallic compound containing Ti acts as a nucleation site itself and forms an Mg-rich phase in the plating layer. This reduces the content of Mg used to form the eutectic phases, and increases the lamellar spacing of the eutectic phases. As such, the reaction interfaces on the plated surface are reduced and the acceleration of darkening is decreased.

The above-described Ti-based intermetallic compound may necessarily include Ti: 3 wt% to 40 wt% and further include two or more of Si: 3 wt% to 30 wt%, Fe: 1 wt% to 40 wt%, and Al: 1 wt% to 50 wt%. Furthermore, the intermetallic compound containing Ti and Fe also combines with Si which reduces Fe serving as a nucleation site and suppresses grain growth, coarsening the microstructure of the plating. As a result, because the microstructure of the plating layer is coarsened, active interfaces are reduced and darkening resistance is improved.

The reduction of black spot defects will now be described. Black spot defects are characterized by a very fine lamellar structure, which typically occurs due to supercooling caused by the adsorption of foreign substances. When TiB is added, as mentioned earlier, it coarsens the microstructure. Thus, a very fine lamellar structure, which is normally formed due to supercooling caused by the adsorption of foreign substances, does not easily develop and thus the formation of black spot defects is reduced. Meanwhile, the content of Ti and/or TiB may be 0.01 wt% to 0.1 wt%. To control darkening and black spot defects through microstructural control, the content of Ti and/or TiB needs to be 0.01 wt% or more. When the content of Ti and/or TiB exceeds 0.1 wt%, the intermetallic compound combined with Ti and/or TiB, which acts as a nucleation site, excessively increases the fraction of the Mg-rich phase and reduces workability. When both Si and Ti and/or TiB are added simultaneously, the effects of adding Ti and/or TiB and adding Si offset each other. Thus, the content ratio therebetween needs to be adjusted considering phase control and appearance improvement. The ratio of Ti and/or TiB to Si needs to be controlled such that Ti and/or TiB is added at a ratio of 1.0 or more when Si is added at a ratio of 1.0.

TiB is added using an Al-5%Ti-1%B alloy ingot, and the content thereof is determined based on the content of Ti. It is known that, when TiB is added, intermetallic compounds such as TiB₂ and Al₃Ti are formed and act as nucleation sites during the solidification of the plating layer. B is generally added not alone but at a Ti-to-B ratio of 5:1 or more. That is, when the content of Ti is 0.01 wt% to 0.1 wt%, the content of B is 0.002 wt% to 0.02 wt%.

The plating layer according to an embodiment of the present invention includes a primary Zn phase, a binary eutectic phase having a lamellar structure of Zn and MgZn₂ phases, and a ternary eutectic phase having a lamellar structure of MgZn₂ and Zn phases with Al, and the difference in solidifying temperature between the primary Zn phase and the binary eutectic phase is no more than 30°C. The area ratio of the primary Zn phase, in which the ratio of the average width to the average height is 3 or more and the average height is 80% or more of the thickness of the plating layer, is less than 50% of the total primary Zn phase. The plating layer may have an Al-to-Mg ratio of 1.0 or more and 2.0 or less.

In step (b) (S20), the annealing may be performed at a temperature of 700°C to 850°C. In step (c) (S30), the plating bath may have a temperature of 400°C to 520°C.

In the above-described plating process, the plating layer has different fractions of a primary Zn phase, a binary eutectic phase having a lamellar structure of Zn and MgZn₂ phases, and a ternary eutectic phase having a lamellar structure of MgZn₂ and Zn phases with Al, which are separately formed during solidification, depending on the contents of Al, Mg, Si, Ti, and TiB added to Zn to improve corrosion resistance. The plating layer exhibits different mechanical properties and corrosion resistances depending on the fraction of each phase.

When the fraction of the primary Zn phase is high, the plating layer shows a reduction in hardness and corrosion resistance, but the darkening of the plated surface when exposed to the outside environment may decrease. In terms of preventing darkening, controlling the fraction of the primary Zn phase is a critical issue.

Although the binary eutectic phase improves corrosion resistance, when the binary eutectic phase is formed coarsely, cracks occur in the binary eutectic phase during working and thus workability deteriorates. Thus, the fraction of the binary eutectic phase needs to be controlled properly.

The ternary eutectic phase includes a lamellar structure in which Zn and MgZn₂ layers alternate with each other, with Al incorporated within the lamellar structure. Like the binary eutectic phase, the ternary eutectic phase also improves corrosion resistance. However, due to a smaller lamellar spacing compared to the binary eutectic phase, the ternary eutectic phase has more active interfaces per unit area. Thus, when the fraction of the ternary eutectic phase on the surface is high, darkening occurs easily in corrosive environments. By controlling the fractions of the phases with the characteristics described above, corrosion resistance may be improved and surface quality may be controlled.

When the primary Zn phase is formed coarsely, darkening resistance in corrosive environments is excellent but corrosion resistance is reduced due to the direct exposure of Zn to the corrosive environments. Particularly, when the area ratio of the primary Zn phase, in which the ratio of the average width to the average height is 3 or more and the average height is 80% or more of the total thickness of the plating layer, is 50% or more of the total primary Zn phase in a cross-sectional view of the plating layer, corrosion resistance rapidly decreases. This phenomenon occurs because corrosion products of the eutectic phases near the primary Zn phase, which are intended to improve corrosion resistance, may not form sufficient passive oxides to prevent the corrosion of the primary Zn phase.

To configure the microstructure of the present invention, the Al-to-Mg composition ratio and the ratio of the solidified phases may be controlled through cooling rate control. When the Al-to-Mg composition ratio is 1:2 or less, the order of solidification is as follows: the primary Zn phase is solidified first, the binary eutectic phase is solidified second, and then the ternary eutectic phase is solidified last. However, when the composition ratio exceeds 1:2, the order of solidification may change. To configure an embodiment of the present invention, after being coated with a composition where the temperature difference between the formation of the primary Zn phase and the formation of the binary eutectic phase is 30°C or less, the plating layer needs to be cooled at a cooling rate of 5 °C/sec or more, and more specifically, 7 °C/sec or more. However, when the cooling rate exceeds 30 °C/sec, excessive cooling pressure may cause uneven solidification of the plated surface.

In the plating process, Al and Mg need to be added to Zn at a ratio of 1:1 or more, and more specifically, 1.2:1 or more, to minimize the oxidation of Mg. Al in the molten metal reacts with oxygen in the air to form a dense oxide layer, which prevents the supply of oxygen to the surface layer of the molten metal, thereby preventing the oxidation of Mg. However, when the Al-to-Mg ratio exceeds 2:1, the probability that the ternary eutectic phase is formed first increases. Thus, the total fraction of the ternary eutectic phase increases, which reduces darkening resistance when exposed to the outside.

In the plating process of the present invention, the content range of Al is 0.5 wt% to 3 wt%. When the content of Al is less than 0.5 wt%, the prevention of Mg oxidation is insufficient. When the content of Al exceeds 3 wt%, a large amount of Fe dross, caused by Fe eluted from the base steel, may lead to surface quality problems.

The content range of Mg is 1 wt% to 2 wt%. When the content of Mg is less than 1 wt%, the formation of the eutectic phases contributing to corrosion resistance is insufficient. When the content of Mg exceeds 2 wt%, although corrosion resistance improves, because the fraction of the eutectic phases increases rapidly, cracks on the plated surface increase during working, and the color difference change becomes uncontrollable due to the corrosion of the eutectic phases on the plated surface in corrosive environments.

The difference in solidifying point between the primary Zn phase and the binary eutectic phase is related to the duration for which the primary Zn phase grows. The larger the difference in solidifying temperature between the primary Zn phase and the binary eutectic phase, the longer the primary Zn phase may grow during cooling. Thus, the possibility that the ratio of the average width to the average height of the plating layer is 3 or more and the average height of the primary Zn phase is 80% or more of the total thickness of the plating layer increases.

Test examples will now be described for better understanding of the present invention. However, the following test examples are merely to promote understanding of the present invention, and the present invention is not limited to thereto.

### Test Examples

Each sample is prepared by immersing a cold-rolled steel sheet with a thickness of 0.7 mm in a 50°C alkaline solution for 30 minutes, and then washing with water to remove foreign substances and oil from the surface. This sample is annealed and then plated. The annealing is performed in a reducing atmosphere consisting of 10% to 30% hydrogen and 70% to 90% nitrogen, at a temperature of 700°C to 750°C.

The plating includes cooling the annealed sample to a plating bath temperature, immersing the sample in a plating bath for 2 seconds, withdrawing the sample, and performing nitrogen wiping to adjust the plating thickness to approximately 10 *µ*m. In this case, the plating bath temperature is 400°C to 520°C. The cold-rolled steel sheet has a composition of carbon (C): 0.15 wt%, manganese (Mn): 0.6 wt%, phosphorus (P): 0.05 wt%, sulfur (S): 0.005 wt%, and the balance of Fe.

Table 1 shows the process conditions, as well as the microstructures and properties of the plating layers of the plated steel sheets according to the test examples of the present invention.

In Table 1, Zn, Al, Mg, Si, and TiB indicate the plating bath composition (unit: wt%) in the plating process.

Darkening resistance was evaluated by storing each sample for 1 hour in a hot and humid environment with a relative humidity of 90% or higher and a temperature of 50°C, and then measuring the color difference on the surface of the steel sheet by using a color difference meter. The criteria for evaluation based on the color difference before and after the darkening resistance test are as follows: ⊚ indicates a color difference △E of 6.0 or less, ○ indicates a color difference △E of 8.0 or less, △ indicates a color difference △E of 12.0 or less, and X indicates a color difference △E greater than 12.0.

Black spot defects were evaluated by measuring the number of black spot defects per unit area (10×10 cm). ⊚ indicates zero black spot defects, O indicates one black spot defect, △ indicates two or three black spot defects, and X indicates more than three black spot defects.

Plating layer cracks represent the workability of the plating layer and were evaluated based on the following criteria depending on the formation of cracks on the worked portion after 3T-bending. ○ indicates a case where relatively thin and fine cracks are visible to the naked eye, △ indicates a case where relatively thick and few cracks are visible to the naked eye, but the detachment of the plating layer is anticipated due to a large number of cracks, and X indicates a case where relatively thick and numerous cracks are visible to the naked eye.

**[Table 1]**

| Test Example | Zn | Al | Mg | Si | TiB | Ti-based Intermetallic Compound Formation | Plating Layer Cracks | Number of Black Spot Defects | Darkening Resistance |
|---|---|---|---|---|---|---|---|---|---|
| Test Example 1 | Bal. | 1 | 1 | 0.01 | - | X | ○ | △ | △ |
| Test Example 2 | Bal. | 2 | 1 | 0.01 | - | X | ○ | X | △ |
| Test Example 3 | Bal. | 2 | 1.5 | 0.02 | - | X | ○ | X | X |
| Test Example 4 | Bal. | 2 | 1.5 | 0.02 | 0.01 | X | ○ | X | △ |
| Test Example 5 | Bal. | 3 | 1.5 | 0.05 | 0.03 | O | ○ | X | X |
| Test Example 6 | Bal. | 3 | 1.5 | 0.15 | 0.05 | O | X | X | △ |
| Test Example 7 | Bal. | 3 | 1.5 | 0.05 | 0.15 | O | △ | ⊚ | ⊚ |
| Test Example 8 | Bal. | 1 | 1 | 0.01 | 0.01 | O | ○ | ⊚ | ⊚ |
| Test Example 9 | Bal. | 2 | 1 | 0.01 | 0.02 | O | ○ | ⊚ | ⊚ |
| Test Example 10 | Bal. | 2 | 1.5 | 0.02 | 0.02 | O | ○ | ○ | ○ |
| Test Example 11 | Bal | 2. | 1.5 | 0.02 | 0.05 | O | ○ | ⊚ | ○ |
| Test Example 12 | Bal. | 3 | 1.5 | 0.05 | 0.08 | O | ○ | ○ | ○ |

Referring to Table 1, Test Examples 1, 2, and 3 correspond to cases where the plating bath composition (unit: wt%) in the plating process meets the ranges of Al: 0.5 wt% to 3 wt%, Mg: 1 wt% to 2 wt%, and Si: 0.005 wt% to 0.1 wt%, but Ti and/or TiB is not added to the plating bath. The resulting plating layers exhibit no formation of Ti-based intermetallic compounds, two or more black spot defects, and a color difference △E greater than 8.0 before and after the darkening resistance test.

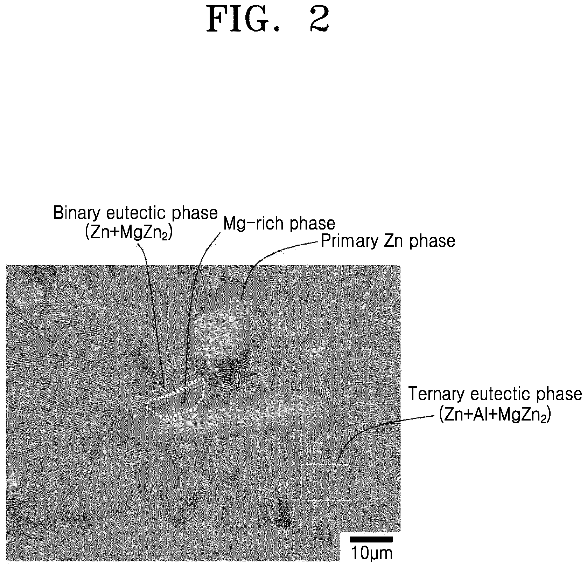

Referring to FIG. 2 showing a microscopic image of the plating layer of the plated steel sheet according to Test Example 2 of the present invention, it is shown that the plating layer includes an Mg-rich phase, a primary Zn phase, a binary eutectic phase having a lamellar structure of Zn and MgZn₂ phases, and a ternary eutectic phase having a lamellar structure of MgZn₂ and Zn phases with Al, and that no intermetallic compound containing Ti is formed.

Test Example 4 corresponds to a case where the plating bath composition (unit: wt%) in the plating process meets the ranges of Al: 0.5 wt% to 3 wt%, Mg: 1 wt% to 2 wt%, Si: 0.005 wt% to 0.1 wt%, Ti or TiB: 0.01 wt% to 0.1 wt%, and the balance of Zn, but the Ti-to-Si content ratio is less than 1.0. The resulting plating layer exhibits no formation of Ti-based intermetallic compounds, three or more black spot defects, and a color difference △E greater than 8.0 before and after the darkening resistance test.

Test Example 5 corresponds to a case where the plating bath composition (unit: wt%) in the plating process meets the ranges of Al: 0.5 wt% to 3 wt%, Mg: 1 wt% to 2 wt%, Si: 0.005 wt% to 0.1 wt%, Ti or TiB: 0.01 wt% to 0.1 wt%, and the balance of Zn, but the Ti-to-Si content ratio is less than 1.0. The resulting plating layer exhibits three or more black spot defects, and a color difference △E greater than 12.0 before and after the darkening resistance test.

Test Example 6 corresponds to a case where the plating bath composition (unit: wt%) in the plating process meets the ranges of Al: 0.5 wt% to 3 wt%, Mg: 1 wt% to 2 wt%, and Ti or TiB: 0.01 wt% to 0.1 wt%, but exceeds the range of Si: 0.005 wt% to 0.1 wt%, and the Ti-to-Si content ratio is less than 1.0. The resulting plating layer shows that relatively thick and numerous cracks are visible to the naked eye on the worked portion after 3T-bending, and exhibits three or more black spot defects and a color difference △E of 12.0 or less before and after the darkening resistance test.

Test Example 7 corresponds to a case where the plating bath composition (unit: wt%) in the plating process meets the ranges of Al: 0.5 wt% to 3 wt%, Mg: 1 wt% to 2 wt%, and Si: 0.005 wt% to 0.1 wt%, but exceeds the range of Ti or TiB: 0.01 wt% to 0.1 wt%. The resulting plating layer shows that relatively thick and few cracks are visible to the naked eye on the worked portion after 3T-bending but the detachment of the plating layer is anticipated due to a large number of cracks, and exhibits zero black spot defects and a color difference △E of 6.0 or less before and after the darkening resistance test.

Test Examples 8 to 12 correspond to cases where the plating bath composition (unit: wt%) in the plating process meets the ranges of Al: 0.5 wt% to 3 wt%, Mg: 1 wt% to 2 wt%, Si: 0.005 wt% to 0.1 wt%, Ti or TiB: 0.01 wt% to 0.1 wt%, and the balance of Zn, and the Ti-to-Si content ratio is 1.0 or more. The resulting plating layers exhibit the formation of Ti-based intermetallic compounds, relatively thin and fine cracks visible to the naked eye on the worked portion after 3T-bending, zero or one black spot defect, and a color difference △E of 8.0 or less before and after the darkening resistance test.

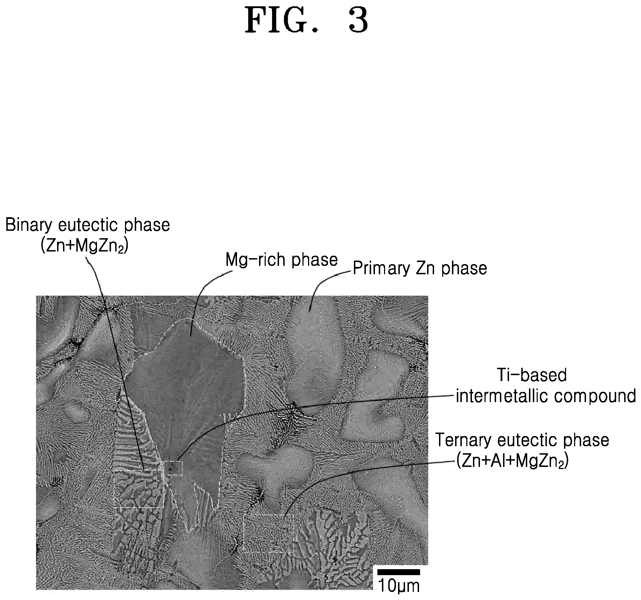

Referring to FIG. 3 showing a microscopic image of the plating layer of the plated steel sheet according to Test Example 9 of the present invention, it is shown that the plating layer includes an Mg-rich phase, a primary Zn phase, a binary eutectic phase having a lamellar structure of Zn and MgZn₂ phases, and a ternary eutectic phase having a lamellar structure of MgZn₂ and Zn phases with Al, and that an intermetallic compound containing Ti exists in the Mg-rich phase.

While the present invention has been particularly shown and described with reference to embodiments thereof, it will be understood by one of ordinary skill in the art that various changes in form and details may be made therein without departing from the scope of the present invention as defined by the following claims.

## Claims

1. A plated steel sheet comprising:
a cold-rolled steel sheet; and
a plating layer coated on the cold-rolled steel sheet and consisting of aluminum (AI): 0.5 wt% to 3 wt%, magnesium (Mg): 1 wt% to 2 wt%, silicon (Si): 0.005 wt% to 0.1 wt%, titanium (Ti): 0.01 wt% to 0.1 wt%, and a balance of zinc (Zn) and other unavoidable impurities,
wherein the plating layer has a Ti-to-Si content ratio of 1.0 or more, and
wherein the plating layer comprises an intermetallic compound containing Ti.

2. The plated steel sheet of claim 1, wherein the plating layer further contains boron (B): 0.002 wt% to 0.02 wt%.

3. The plated steel sheet of claim 1, wherein the intermetallic compound comprises Ti: 3 wt% to 40 wt%, and further comprises two or more of Si: 3 wt% to 30 wt%, iron (Fe): 1 wt% to 40 wt%, and Al: 1 wt% to 50 wt%.

4. The plated steel sheet of claim 3, wherein the intermetallic compound contains Ti and Fe, and comprises Ti: 3 wt% to 40 wt% and Fe: 1 wt% to 40 wt%.

5. The plated steel sheet of claim 1, wherein the plating layer comprises an Mg-rich phase, a primary Zn phase, a binary eutectic phase having a lamellar structure of Zn and MgZn₂ phases, and a ternary eutectic phase having a lamellar structure of MgZn₂ and Zn phases with Al, and
wherein, in the plating layer, the ternary eutectic phase occupies an area fraction of 30% or more, and the binary eutectic phase occupies an area fraction less than 30%.

6. The plated steel sheet of claim 1, wherein the plating layer has an Al-to-Mg ratio of 1.0 or more and 2.0 or less.

7. The plated steel sheet of claim 1, wherein the plating layer comprises an Mg-rich phase, a primary Zn phase, a binary eutectic phase having a lamellar structure of Zn and MgZn₂ phases, and a ternary eutectic phase having a lamellar structure of MgZn₂ and Zn phases with Al, and
wherein the Mg-rich phase comprises Mg: 5 wt% to 15 wt%, Zn: 85 wt% to 95 wt%, and Al: less than 1 wt%.

8. The plated steel sheet of claim 7, wherein the intermetallic compound containing Ti exists in the Mg-rich phase.
